# EUROPEAN PATENT APPLICATION

(11) **EP 2 141 375 A1**
(43) Date of publication of application: **06.01.2010**
(21) Application number: 08720861.7
(22) Date of filing: 26.02.2008
(51) Int. Cl.: F16D 3/20, B23B 1/00, F16D 3/205

(54) **TRUNNION, TORIPOD-TYPE CONSTANT-VELOCITY UNIVERSAL JOINT USING THE TRUNNION AND METHOD OF PRODUCING THE SAME**

(30) Priority: 26.03.2007 JP 2007079854
(71) Applicant: NTN Corporation, Osaka-shi, Osaka 550-0003 (JP)
(72) Inventor: AKIMOTO, Shogo, Iwata-shi Shizuoka 438-0037 (JP)
(74) Representative: Grünecker, Kinkeldey, Stockmair & Schwanhäusser Anwaltssozietät
(86) International application number: PCT/JP2008/053275
(87) International publication number: WO 2008/117612

(57) **Abstract**

The present invention provides a machining method for machining a trunnion journal with high precision using a simple device, with little adverse effect on the environment, and with high productivity, a trunnion formed by the machining method, and a tripod constant velocity universal joint using the trunnion. An outer joint member 1 includes three track grooves extending in an axial direction formed on an inner circumferential surface. A trunnion 2 includes columnar trunnion journals 22 projecting in a radial direction from trisecting positions in the circumferential direction of a boss shaft 21. The trunnion journal 22 has a straight-shaped vertical cross-section and an elliptical horizontal cross-section that is long in the joint circumferential direction. The trunnion journal 22 is formed by hardened steel being dry-cut. A roller cassette 3 fitted around the trunnion journal 22 such as to rotate freely includes a roller 31 an inner ring 32, and a plurality of needle rollers 33 sandwiched between the roller 31 and the inner ring 32.

## Description

### TECHNICAL FIELD

The present invention relates to a method of machining a work using dry cutting, a trunnion machined by the machining method, and a tripod constant velocity universal joint using the trunnion.

### BACKGROUND ART

A tripod constant velocity universal joint is used, for example, in a power transmission device of automobiles and industrial machineries to connect a driving shaft and a driven shaft. The tripod constant velocity universal joint is configured such that rotational torque can be transmitted at a constant velocity even when the driving shaft and the driven shaft are at an operating angle. In addition, relative displacement in an axial direction can be allowed.

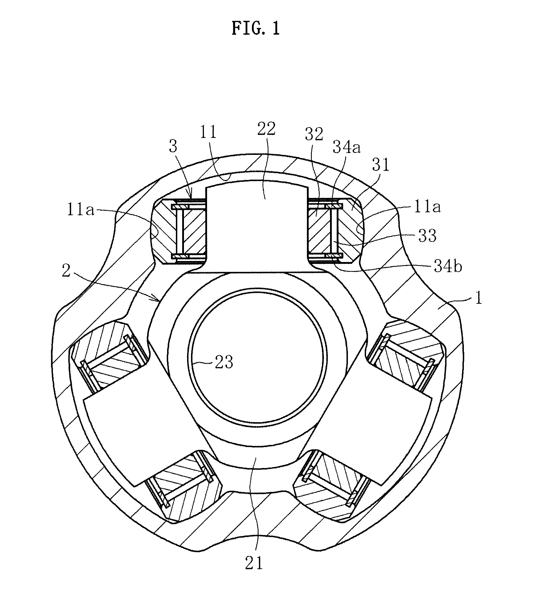

As shown in Fig. 1, the tripod constant velocity universal joint includes an outer joint member 1 and a trunnion 2. The outer joint member 1 is fixed to one end of a driving shaft and a driven shaft. The trunnion 2 is fixed to the other end of the driving shaft and the driven shaft. Track grooves 11 that extend in an axial direction of the outer joint member 1 are formed on an inner circumferential surface of the outer joint member 1 in trisecting positions in the circumferential direction. On the other hand, the trunnion 2 has a boss shaft 21 and columnar trunnion journals 22. The boss shaft 21 is fixed to the other end of the driving shaft and the driven shaft. The trunnion journals 22 project in a radial direction from trisecting positions in the circumferential direction of the boss shaft 21. The trunnion journal 22 is formed having a straight-shaped vertical cross-section and an elliptical horizontal cross-section that is long in the circumferential direction of the joint. A double-roller roller cassette 3 is fitted onto an outer circumferential surface of the trunnion journal 22. The roller cassette 3 includes a roller 31, an inner ring 32, and a plurality of needle rollers 33 sandwiched between the roller 31 and the inner ring 32. The roller cassette 3 is attached to the trunnion journal 22 such as to rotate freely. The roller 31 of the roller cassette 3 is fitted between opposing guiding surfaces 11a of the track groove 11 in the outer joint member 1.

In the tripod constant velocity universal joint configured as described above, for example, when the driving shaft is fixed to the outer joint member 1, a rotational force applied from the driving shaft to the outer joint member 1 is transmitted to the boss shaft 21 of the trunnion 2, via the track grooves 11, the roller cassettes 3, and the trunnion journals 22, and rotates the driven shaft. When the tripod constant velocity universal joint is at an operating angle, each trunnion journal 22 is angularly displaced in a joint axis line direction, within the inner ring 32 of the roller cassette 3, in accompaniment with the rotation of both rotation shafts. With the displacement of the trunnion journals 22, the roller 31 of each roller cassette 3 borne by a trunnion journal 22 rolls over the guiding surfaces 11a of the track groove 11, and the overall roller cassette 3 is relatively displaced in the axial direction of the trunnion journal 22. As a result of the roller cassette 3 making a swinging and sliding movement in relation to the trunnion journal 22 in this way, the position of the roller 3 is held parallel to the guiding surfaces 11a. Sliding and sliding resistance between the roller 31 and the guiding surfaces 11a are reduced. As a result, occurrence of induced thrust in the axial line direction of the tripod constant velocity universal joint can be suppressed, and noise, vibration, and harshness (NVH) characteristics of an automobile can be improved.

The swinging and sliding movement of the roller cassette 3 can be achieved by the vertical cross-section of the trunnion journal 22 being formed into a straight shape and the horizontal cross-section being formed into an elliptical shape. To ensure the NVH characteristics of the automobile, the trunnion journal 22 is required to be shaped with high precision.

Conventionally, in general, forging, cutting, heat-treatment, grinding, and assembly are sequentially performed to manufacture the trunnion. A trunnion journal having an elliptical cross-sectional shape is formed by the grinding process. As a grinder used to form the trunnion journal, a device is known in which a trunnion material is attached to a main shaft by a stopper and supported by a tailstock spindle. In a state in which the trunnion material is rotatably driven, a cam follower mechanism is used to swing the main shaft and the tailstock spindle against a grindstone (refer, for example, to Patent Document 1).
Patent Document 1: Japanese Patent Laid-open Publication No. Showa 58(1983)-181558

### DISCLOSURE OF THE INVENTION

### PROBLEMS TO BE SOLVED BY THE INVENTION

In the grinding process, powdered grinding dust is generated. The grinding dust is discharged with grinding oil as grinding sludge. A portion of the grinding sludge is reused as grinding oil after the grinding dust is filtered out. High-concentration sludge resulting from the filtering process is disposed. In this way, because the grinding process requires a supplying device and a filtering device related to the grinding oil, configuration of the grinder is complicated. The disposed sludge may have an adverse effect on the environment. Preparations are required to be made to supply the grinding oil during a machining operation. Problems are present in that the operation is laborious and productivity is low.

Therefore, an object of the present invention is to provide a machining method for machining a trunnion journal with high precision using a simple device, with little adverse effect on the environment, and with high productivity, a trunnion formed by the machining method, and a tripod constant velocity universal joint using the trunnion.

### MEANS FOR SOLVING THE PROBLEMS

To solve the above-described issues, in a machining method according to a first aspect, a work is machined into a non-spherical shape by hardened steel being dry-cut. Cubic boron nitride (CBN) cutting tool and the like can be used as a cutting tool.

As a result of the configuration, a work that is formed, for example, by steel material being forged and heat-treated is machined by cutting to form the non-spherical shape. Dry cutting of hardened steel is a process that does not use processing fluid such as cutting oil. Therefore, devices for supplying grinding oil and filtering, required in a conventional grinding process, are not required. As a result, machining can be performed by a simple device. Because processing fluid is not used, adverse effects on the environment accompanying sludge processing can be prevented. Furthermore, preparations for supplying the processing oil are not required, operation requires little labor, and high productivity can be ensured.

A machining method according to a second aspect is the machining method according to the first aspect, in which the non-spherical shape is an elliptical shape.

According to the second aspect, the work can be machined into an elliptical shape.

A trunnion according to a third aspect includes a trunnion journal machined by a machining method according to the first or second aspect.

As a result of the configuration, a trunnion having a non-spherically-shaped trunnion journal can be obtained using a simple processing device, with no adverse effect on the environment, and with high productivity.

A tripod constant velocity universal joint according to a fourth aspect includes a trunnion according to the third aspect; an outer joint member in which three track grooves extending in an axial direction are formed in an inner circumferential portion, and a roller guiding surface extending in the axial direction is provided on both sides of each track groove; and a roller that is inserted into the track groove, and can roll in a joint axial direction along the roller guiding surface. In the tripod constant velocity universal joint, three trunnion journals are formed in the trunnion such as to project in a radial direction, and the roller is attached to the trunnion journal such as to rotate freely.

As a result of the configuration, rotational torque can be transmitted at a constant velocity even when the outer joint member and the trunnion are at an operating angle. A tripod constant velocity universal joint that can be relatively displaced in the axial direction can be obtained using a simple processing device, with no adverse effect on the environment, and with high productivity.

A tripod constant velocity universal joint according to a fifth aspect is the tripod constant velocity universal joint according to the fourth aspect, and includes an inner ring that is fitted onto the trunnion journal and supports the roller such as to rotate freely. An inner circumferential surface of the inner ring is formed having a circular arc-shaped convex cross-section. An outer circumferential surface of the trunnion journal has a straight-shaped vertical cross-section and a non-spherically-shaped horizontal cross-section of which a diameter in the joint circumferential direction that is greater than a diameter in the joint axial direction.

According to the fifth aspect, when the outer joint member and the trunnion operate at an operating angle, the roller and the inner ring make a swinging and sliding movement in relation to the trunnion journal. Here, because the outer circumferential surface of the trunnion journal has a straight-shaped vertical cross-section and a non-spherically-shaped horizontal cross-section having a diameter in a joint circumferential direction that is greater than a diameter in a joint axial direction, contact with the inner ring is closer to a point contact. Therefore, the positions of the roller and the inner ring within the track groove are stable. As a result, sliding and sliding resistance between the roller and the roller guiding surface are reduced. Induced thrust in the axial line direction can be effectively reduced. A low-vibration tripod constant velocity universal joint can be obtained.

A tripod constant velocity universal joint according to a sixth aspect is the tripod constant velocity universal joint according to the fourth aspect, including an inner ring that is fitted onto the trunnion journal and supports the roller such as to rotate freely. At least a portion of the outer circumferential surface of the trunnion journal is a convex spherical surface.

According to the sixth aspect, when the outer joint member and the trunnion operate at an operating angle, the roller and the inner ring make a swinging and sliding movement in relation to the trunnion journal. As a result, the positions of the roller and the inner ring within the track groove are stable, and sliding and sliding resistance between the roller and the roller guiding surface are reduced. Here, because at least a portion of the outer circumferential surface of the trunnion journal is a convex spherical surface, contact surface pressure between the trunnion journal and the inner ring is reduced. Therefore, durability of the trunnion can be improved. As a result, a tripod constant velocity universal joint that has low vibrations and high durability can be obtained.

### ADVANTAGE OF THE INVENTION

In the present invention, a work can be machined into a non-spherical shape with little labor and high productivity by dry-machining in which hardened steel is cut without using processing fluid, such as cutting oil, using a simple device without using conventional devices for supplying grinding oil and filtering, without causing environmental deterioration that accompanies sludge disposal.

### BRIEF DESCRIPTION OF THE DRAWINGS

Fig. 1 is a cross-sectional view of a tripod constant velocity universal joint;
Fig. 2a is a diagram of a trunnion in a tripod constant velocity universal joint according to a first embodiment, viewed from an axis line direction;
Fig. 2b is a cross-sectional view taken along line X-X in Fig. 2a;
Fig. 2c is a cross-sectional view taken along line Y-Y in Fig. 2b; and
Fig. 3 is a cross-sectional view of a tripod constant velocity universal joint according to a second embodiment.

### BEST MODE FOR CARRYING OUT THE INVENTION

Embodiments of the present invention will be described below with reference to the drawings. Aside from a method of machining a trunnion, a tripod constant velocity universal joint according to a first embodiment is the same as the tripod constant velocity universal joint in Fig. 1. Therefore, the first embodiment will be described with reference to Fig. 1.

As does the tripod constant velocity universal joint shown in Fig. 1, the tripod constant velocity universal joint according to the first embodiment includes an outer joint member 1 and a trunnion 2. The outer joint member 1 is fixed to one end of a driving shaft and a driven shaft. The trunnion 2 is fixed to the other end of the driving shaft and the driven shaft. The outer joint member I is a hollow cylinder that is open on one end. Track grooves 11 that extend in an axial direction are formed on an inner circumferential surface of the outer joint member 1 in trisecting positions in the circumferential direction.

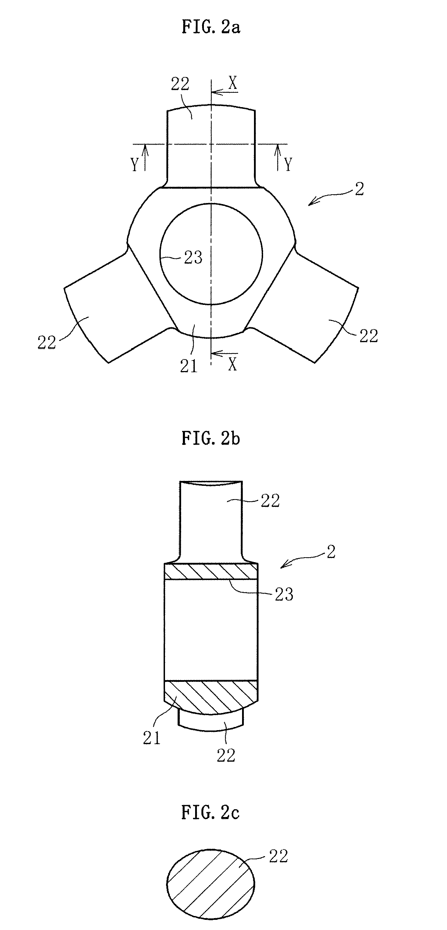

Fig. 2a is a diagram of the trunnion 2 viewed from an axial line direction. Fig. 2b is a cross-sectional view taken along line X-X in Fig. 2a. Fig. 2c is a cross-sectional view taken along line Y-Y in Fig. 2a. As shown in Fig. 2 to Fig. 2c, the trunnion 2 has a boss shaft 21 and columnar trunnion journals 22. The boss shaft 21 is fixed to the other end of the driving shaft and the driven shaft. The trunnion journals 22 project in a radial direction from trisecting positions in the circumferential direction of the boss shaft 21. A boss hole 23 is formed in the center of the boss shaft 21, coaxially with the axial line of the boss shaft 21. A spline that meshes with the other end of the driving shaft and the driven shaft are provided on the surface of the boss hole 23. A vertical cross-section of the trunnion journal 22 including the axial line of the trunnion journal 22 is formed having a straight shape. A horizontal cross-section of the trunnion journal 22 that is perpendicular to the axial line of the trunnion journal 22 is formed having an elliptical shape that is long in the joint circumferential direction.

In the trunnion 2, the elliptical cross-section of the trunnion journal 22 is formed by hardened steel being dry-cut. In other words, when manufacturing the trunnion journal 22, a work formed by steel being forged and heat-treated is machined by cutting to form the elliptical cross-sectional shape. Because hardened steel is cut, in the cutting process, a bite made of a sintered body is used. The sintered body is, for example, cubic boron nitride (CBN) to which a special ceramic binder is added. Dry cutting of hardened steel is a process that does not use processing fluid such as cutting oil. Therefore, devices for supplying grinding oil and filtering, required in a conventional grinding process, are not required. As a result, machining can be performed by a simple device. Because processing fluid is not used to dry-cut hardened steel, adverse effects on the environment accompanying sludge processing can be prevented. Furthermore, because preparations for supplying the processing oil are not required, operation requires little labor. The trunnion journal 22 can be formed with high productivity.

A double-roller roller cassette 3 is fitted onto an outer circumferential surface of the trunnion journal 22. The roller cassette 3 includes a ring-shaped roller 31, and a ring-shaped an inner ring 32 disposed on an inner circumferential surface side of the roller 31. A plurality of needle rollers 33 are arranged in a full-complement state between the inner circumferential surface of the roller 31 and the outer circumferential surface of the inner ring 32. Ring-shaped grooves in the circumferential direction are formed near both ends of the inner circumferential surface of the roller 31 in the axial direction. The inner ring 32 and the needle rollers 33 are prevented from detaching by stopper rings 34a and 34b fitted into the grooves. The roller cassette 3 is fitted around the trunnion journal 22 such as to rotate freely, in a state in which the inner circumferential surface of the inner ring 32 is in contact with the outer circumferential surface of the trunnion journal 22. The outer circumferential surface of the roller 31 of the roller cassette 3 is fitted between opposing circular arc-shaped guiding surfaces 11a of the track groove 11 in the outer joint member 1.

In the tripod constant velocity universal joint configured as described above, for example, when the driving shaft is fixed to the outer joint member 1, a rotational force applied from the driving shaft to the outer joint member 1 is transmitted to the boss shaft 21 of the trunnion 2, via the track grooves 11, the roller cassettes 3, and the trunnion journals 22, and rotates the driven shaft. When the tripod constant velocity universal joint is at an operating angle, each trunnion journal 22 is angularly displaced in an axis line direction of the joint, within the inner ring 32 of the roller cassette 3, in accompaniment with the rotation of both rotation shafts. With the displacement of the trunnion journals 22, the roller 31 of each roller cassette 3 borne by a trunnion journal 22 rolls over the guiding surfaces 11a of the track groove 11, and the overall roller cassette 3 is relatively displaced in the axial direction of the trunnion journal 22.

In the swinging and sliding movement of the roller cassette 3 in relation to the trunnion journal 22, the position of the roller 3 is held stably parallel to the guiding surfaces 11a because the trunnion journal 22 is formed with high precision in the cutting process. Sliding and sliding resistance between the roller 31 and the guiding surfaces 11a are reduced. Occurrence of induced thrust in the axial line direction of the tripod constant velocity universal joint can be suppressed. As a result, NVH characteristics of an automobile using the tripod constant velocity universal joint can be effectively improved.

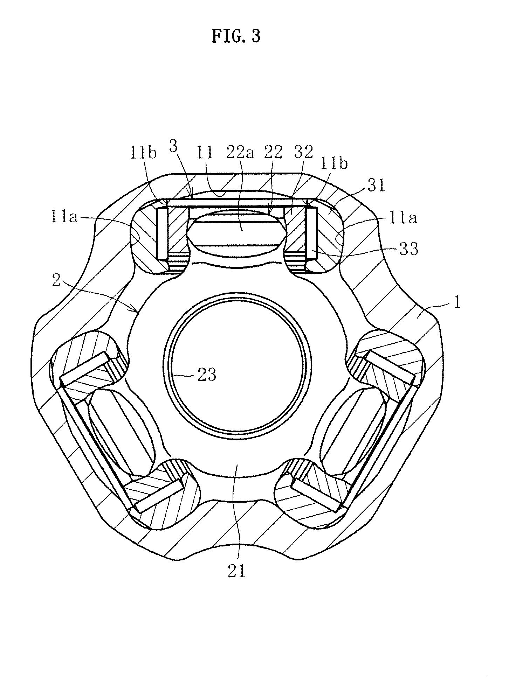

Fig. 3 is a cross-sectional view of a tripod constant velocity universal joint according to a second embodiment of the present invention. Structures of a trunnion journal and a roller cassette in the tripod constant velocity universal joint according to the second embodiment differ from those according to the first embodiment. In Fig. 3, sections providing functions similar to those in Fig. 1 are given the same reference numbers.

Like the tripod constant velocity universal joint according to the first embodiment, the tripod constant velocity universal joint according to the second embodiment is a double-roller type that includes the roller cassette 3 having the roller 31 and the inner ring 32. However, the shape of the trunnion journal 22 outer of which the roller cassette 3 is fitted is not elliptical but, rather, partially spherical. In other words, an intermediate portion of the trunnion journal 22 in the axial direction has the greatest diameter. The diameters of the base portion and the tip portion of the trunnion journal 2 are small. The shape of the outer circumferential surface of a large diameter section 22a of the trunnion journal 22 is a convex spherical surface. The inner circumferential surface of the inner ring 32 that is in contact with the large diameter section 22a of the trunnion journal 22 is a concave spherical surface. The outer circumferential surface of the roller 31 is formed into a concave spherical surface, and the corresponding guiding surface 11a of the track groove 11 in the outer joint member I is a cylindrical surface. A flat section 11b is formed in the track groove 11 in a portion adjacent to the guiding surface 11a. The flat section 11b guides the side surface of the roller 31 and prevents the roller cassette 3 from tilting.

In the manufacturing process of the trunnion 2 according to the second embodiment, the trunnion journal 22 including the large diameter section 22a having the convex spherical surface is formed by hardened steel being dry-cut. Therefore, devices for supplying grinding oil and filtering, required in a conventional grinding process, are not required. As a result, machining can be performed by a simple device. Because processing fluid is not used to dry-cut hardened steel, adverse effects on the environment accompanying sludge processing can be prevented. Furthermore, because preparations for supplying the processing oil are not required, operation requires little labor. The trunnion journal 22 can be formed with high productivity

Embodiments of the present invention are described above. However, the present invention is not limited to the above-described embodiments. Various modifications can be made. For example, in the invention according to the second embodiment, the overall outer circumferential surface of the trunnion journal 22 can be a convex spherical surface having a relatively large radius of curvature. The inner circumferential surface of the inner ring 32 that is in contact with the outer circumferential surface of the trunnion journal 22 can be a cylindrical surface. In this instance as well, because the trunnion journal 22 is formed by hardened steel being dry-cut, the trunnion can be manufactured with high productivity using a device that is simpler than a conventional device, while preventing adverse effects on the environment.

## Claims

1. A machining method, wherein a work is machined into a non-spherical shape by hardened steel being dry-cut.

2. A machining method according to claim 1, wherein the non-spherical shape is an elliptical shape.

3. A trunnion, comprising a trunnion journal machined by a machining method according to claim 1 or 2.

4. A tripod constant velocity universal joint, comprising:
a trunnion according to claim 3;
an outer joint member in which three track grooves extending in an axial direction are formed in an inner circumferential portion, and a roller guiding surface extending in the axial direction is provided on both sides of each track groove; and
a roller that is inserted into the track groove, and can roll in a joint axial direction along the roller guiding surface, wherein
three trunnion journals are formed in the trunnion such as to project in a radial direction, and the roller is attached to the trunnion journal such as to rotate freely.

5. The tripod constant velocity universal joint according to claim 4, comprising:
an inner ring that is fitted onto the trunnion journal and supports the roller such as to rotate freely, wherein
an inner circumferential surface of the inner ring is formed having a circular arc-shaped convex cross-section, an outer circumferential surface of the trunnion journal has a straight-shaped vertical cross-section and a non-spherically-shaped horizontal cross-section of which a diameter in a joint circumferential direction that is greater than a diameter in a joint axial direction.

6. The tripod constant velocity universal joint according to claim 4, comprising:
an inner ring that is fitted onto the trunnion journal and supports the roller such as to rotate freely, wherein
at least a portion of an outer circumferential surface of the trunnion journal is a convex spherical surface.
